# EUROPEAN PATENT APPLICATION

(11) **EP 2 204 974 A1**
(43) Date of publication of application: **07.07.2010**
(21) Application number: 08022546.9
(22) Date of filing: 31.12.2008
(51) Int. Cl.: H04M 1/725, G06F 3/048

(54) **Graphical user interface for mobile communication device**

(71) Applicant: Vodafone Holding GmbH, 40213 Düsseldorf (DE)
(72) Inventor: Aramu, Daniela, 40211 Düsseldorf (DE)
(74) Representative: Jostarndt, Hans-Dieter

(57) **Abstract**

The invention relates to a method for organizing data items, wherein the method comprises the following steps:
- generating a graphical element for each data item;
- associating the graphical element to the corresponding data item;
- determining activation data;
- linking the activation data with the data item;
- generating a menu bar, which comprises a plurality of graphical elements (110; 111; 112; 113; 114; 115; 116; 117; 118; 120; 121; 122; 123; 124; 125; 126; 127; 128; 140; 141; 142; 143; 144; 145; 150; 151; 152; 153; 154; 155);
- evaluating if a selection of at least one selected graphical element (123; 141) of the plurality of graphical elements (110; 111; 112; 113; 114; 115; 116; 117; 118; 120; 121; 122; 123; 124; 125; 126; 127; 128; 141; 142; 143; 144; 145; 150; 151; 152; 153; 154; 155) has occurred;
- carrying out an action based on the activation data related to the selected graphical element (123; 141);
- enabling a selection of a selected set of graphical elements (110; 111; 112; 113 120, 121; 122; 123);
- enabling a plurality of actions corresponding to the selected set of graphical elements (110; 111; 112; 113 120, 121; 122; 123).

## Description

### Technical Field

The present invention is related to a mobile communication device with a graphical user interfaces. In particular, the present invention is related to a mobile communication device according to claim 1. The present invention is also related to a server and a system for replacing the graphical user interface of a mobile communication device.

### Background of the invention

Today there is an increasing number of digital communication devices such as personal digital assistance (PDA), portable computers, mobile telephones, palmtop computers, etc.. Sometimes these devices are also equipped with cameras by taking pictures, as well as video and audio recordings. The features and capabilities of the devices lead to an increasing number of data files that maybe exchanged between different devices and users by wireless or wired networks. As an example, a mobile telephone is no longer limited for receiving and making voice calls but it may take photographs, receive e-mails and SMS messages and voice messages. The variety of different kinds of communication increases the number of communication items significantly. This number of communication items is increased even more because one and the same communication item of the above mentioned types is frequently copied to a plurality of recipients. Because of the sheer quantity it becomes consequently more and more difficult for individuals to organize their communication items on a communication device especially if the communication device has only a small screen.

It is known to set up different kinds of directories in which the communication items are listed in a sequential order according to different sorting criteria such as the name of the sender, receiving time, sent time, subject, and the like. However, conventional sorting mechanisms still do not solve the issue completely and the presentation of a large number of communication items remains difficult to organize in this way. In general, it is very helpful for a user if he can link a specific information item within a certain context of other kinds of information.

Several attempts have been made to help the user to organize communication items in a more efficient way.

US 5898435 describes an image controlling device and a corresponding method. According to the known device a menu is constructed by arranging a plurality of menu items three dimensionally along a single cylinder. A portion of these menu items is displayed in such a manner that viewing is performed from the centre of the cylinder outwards. However, there remains a desire for the user for more support in organizing his communication items.

When today a mobile telephone is released on the market its graphical user interface i.e. the software part of the telephone user interface is a fixed component usually designed by a manufacturer and/or the network provider and programmed in the manufacturing environment of the mobile telephone. Every mobile telephone user interface is inevitably a compromise given the fact it needs to serve a huge audience with very different needs. This means menus are filled with applications which some users never use, the whole display is showing inappropriate elements and for specific information the user needs to open a browser to find this information. Dependant on how many submenus the user has to open this may be a very inefficient process in some cases.

Such menus may differ very greatly in terms of their structure, the number of parameters displayed and the difficulty of using them. The different desires, demands and capabilities of the users mean that there is generally not a single menu which meets the demands of all potential users. In practice, by way of example, a particular menu may be far too complicated and incomprehensible for a first, technically inexperienced user, yet may still be too simple for a second, technically experienced user, because the latter desires further refined setting options or would like to use further services offered.

Even for a single person the most frequently used functionalities may vary throughout a day and a week depending on the context of the daily life of the user. At work, usually calling numbers or caller lists as well as business e-mail functionalities are most important. At home, the same user may never access his business e-mail but rather use a camera and a photo gallery to show photos to visitors. At leisure times, for example on a festival the most important things to this user are latest updates about the festival and notifications when a favourite band starts playing. During holidays a personal blog may be the most frequently accessed service.

The graphical user interface of today's mobile telephones can only be adapted to a very little extent to fit to the personal context of the user let alone to a varying context. At most the user has the possibility in some cases to make some accommodations. E.g. he may configure some aspects of the graphical user interface such as the language and the date format. He may also change the look and feel of the graphical user interface by selecting a template or by "skinning" the mobile telephone, i.e. changing the appearance of elements shown on the display. In some cases, the user may also install additional applications on the telephone.

From US 2005/0289227 A1 a method for editing a new interface of a portable device by using a browser is known. According to the known method a new interface of the portable device is edited with texts and graphics provided on a website associated with a server. The user of the portable device connects to the internet and logs in to a website associated with a server. On the server he may edit text or graphs a window or a picture frame of a new user interface. After the editing is finished the user downloads the information associated with the new user interface into a specific folder of the portable electronic device to replace the original graphical user interface of the device. In this way a personal style of the user interface can be created.

### Brief description of the invention

The present invention proposes a concept for associating information items with activations to emphasise the context of each communication item. It is an advantage of the present invention to provide additional contextual information to each information item. Providing contextual information is a very efficient way to support the memory of the user helping him to find and organise information items.

According to a first aspect the invention suggests a method for organizing data items, wherein the method comprises the following steps:
- generating a graphical element for each data item;
- associating the graphical element to the corresponding data item;
- determining activation data;
- linking the activation data with the data item;
- generating a menu bar, which comprises a plurality of graphical elements;
- evaluating if a selection of at least one selected graphical element of the plurality of graphical elements has occurred;
- carrying out an action based on the activation data related to the selected graphical element;
- enabling a selectable set of graphical elements;
- enabling a plurality of actions corresponding to the selected set of graphical elements.
Preferably enabling of the selection of the set preferably occurs through an interactive design of the menu bar.

Enabling of the plurality of actions may occur in different ways.

According to a first implementation enabling the plurality of actions is carried out by a selection of further graphical elements which are related to activation data.

However a relation to the plurality of actions is available with different implementations of activation data.

According to a further implementation of the invention the selected set of graphical elements is combinable with a plurality of actions.

According a further embodiment of the invention the plurality of actions is selectable from a further menu bar.

According to a further implementation the further menu bar comprises a plurality of graphical elements.

The invention furthermore relates to a graphical user interface and a procedure for handling communication processes by utilizing the graphical user interface.

The proposes menu bar which is self updating. The self updating occurs, if a certain event is detected.

According to one embodiment of the invention the event is a user interaction in a marked area.

According to a further embodiment of the invention the event is the reception of a new message.

A further embodiment of the invention proposes, that the event is a user selection of a graphical element.

According to one embodiment of the invention, an indicator is available. The indicator indicates a user, that a menu bar can be opened by clicking on the indicator.

According to one embodiment of the invention, the indicator is integrated within a status bar. The status bar may be designed as a title bar.

According to a further embodiment of the invention the indicator is clickable.

By clicking the indicator a menu bar, as it is described in the current application, opens.

According to a further embodiment of the invention the menu bar is designed as a context menu. It displays events, as for e.g. received messages, for e.g. telephone calls, e-mails, SMS or mms.

According to a further embodiment of the invention, the content of the menu bar is automatically updated. This updating is called self updating.

As described forehand, the self updating may occur, if a certain event happens, for e.g. a new message as a telephone call, an e-mail, a SMS or a mms is received.

Furthermore it is within the scope of the embodiment of the invention, that a self updating of the menu bar, respectively the list displayed in the menu bar.

Linking the communication item to activation_data is valuable contextual information for the user to support his memory when he tries to remember a situation or to find a specific data item.

According to one embodiment of the invention, the method further comprises a step of associating a communication item with the data item.

According to one embodiment the method further comprises the step of displaying a context menu in conjunction with the graphical elements. A context menu is an efficient way to communicate activation data to the user.

In a convenient development of the inventive method it further comprises the step of positioning the graphical element associated with the data item according to the activation data linked with the data item.

The invention comprises an interactive menu bar, offers a high flexibility.

According to one embodiment the menu bar contains a list of commands, presented to a user by the operating system of the mobile communication device.

Choices given from the menu bar may be selected by the user, for example by:
- depressing a key
- positioning a cursor or reverse video bar by using a keyboard or mouse
- using an electromechanical pointer, such as a light pen
- touching the display screen with a finger

A communication device using a graphical user interface presents menus with a combination of text and symbols to represent choices. By clicking on one of the symbols, the user is selecting the instruction that the symbol represents. A context menu is a menu in which the choices presented to the user are automatically modified according to the current context in which the user is working.

A common use of menus is to provide convenient access to various operations such as saving or opening a file, quitting a program, or manipulating data. For example widget toolkits provide some form of pull-down or pop-up menu.

Pull-down menus are the used in menu bars, which serve for selecting actions.

The graphical element is preferably a definable area, for example an area of the display of the communication device. This area has a selectable extension, shape and/or structure. It is for example a button.

According to one embodiment of the invention, the graphical area comprises an icon.

According to another embodiment of the invention, the graphical area comprises and icon and a label.

According to a further embodiment of the invention, the icon is placed next to the label. According to a further embodiment of the mobile communication device the graphical element is an icon.

Linking the communication item activation_data is valuable contextual information for the user to support his memory when he tries to remember a situation or to find a specific data item.

According to one embodiment of the invention, the method further comprises a step of associating a communication item with the data item.

According to one embodiment the method further comprises the step of displaying a context menu in conjunction with the graphical elements. A context menu is an efficient way to communicate activation data to the user.

In a convenient development of the inventive method it further comprises the step of positioning the graphical element associated with the data item according to the activation data linked with the data item.

According to a further aspect the invention suggests a mobile communication device comprising a radio interface, an input unit, a display, and a processing means, wherein the processing means is arranged to receive a communication item, to associate the communication item with a graphical element and to control the display such that a context menu displayed on the display. The processing means places the graphical element on the context menu to allow a user a selection of one or more graphical elements displayed within the context menu.

Further features and advantages will become apparent when reading the detailed description appended with drawings.

### Short description of the drawings

In the drawing exemplary embodiments of the invention are illustrated. It shows:
- Figure 1: a top view of the mobile communication device according to the invention;
- Figure 2: a schematic block diagram of the communication device;
- Figures 3a to 3d: top views of the communication device in different steps of selecting graphical elements;
- Figures 4a to 4c: top views of the communication device in different steps of updating the menu bar.

Similar or identical features and elements are labeled with the same reference numbers in the drawings.

### Detailed description

Reference herein to "one embodiment" or "an embodiment" means that a particular feature, structure, or characteristic described in connection with the embodiment can be included in at least one implementation of the invention. The appearances of the phrase "in one embodiment" in various places in the specification are not necessarily all referring to the same embodiment, nor are separate or alternative embodiments necessarily mutually exclusive of other embodiments.

While the invention may be susceptible to various modifications and alternative forms, specific embodiments have been shown by way of example in the drawings and will be described in detail herein. However, it should be understood that the invention is not intended to be limited to the particular forms disclosed. Rather, the invention is to cover all modifications, equivalents and alternatives falling within the spirit and scope of the invention as defined by the following appended claims.

One or more specific embodiments of the present invention will be described below. In an effort to provide a concise description of these embodiments, not all features of an actual implementation are described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

Certain aspects commensurate in scope with the disclosed embodiments are set forth below. It should be understood that these aspects are presented merely to provide the reader with a brief summary of certain forms the invention might take and that these aspects are not intended to limit the scope of the invention. Indeed, the invention may encompass a variety of aspects that may not be set forth below.

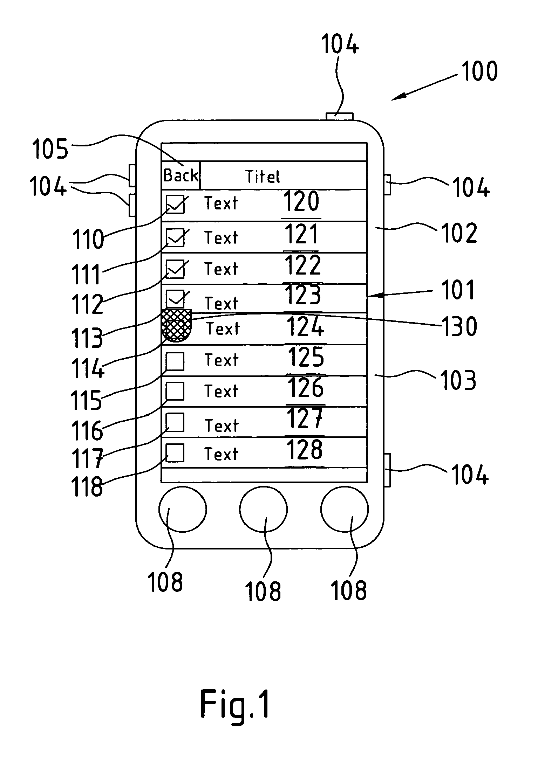

Figure 1 shows a mobile communication device 100 according to the present invention. For example the mobile communication device is a mobile phone, a PDA (personal digital assistant) or the like, which is connected to a wireless public land mobile network (PLMN). The PLMN is a wireless telecommunication network according to GSM standard or according to the UMTS standard for example. The user of the communication device 100 can set up a connection to other communication devices through the network.

For the sake of the simplicity the present invention will be described in the following with reference to a PDA having a relatively large screen 101 covering a major part of the top surface 102 of the housing 103 of the mobile communication device. However, the present invention shall not be limited to PDAs.

On the periphery of the housing 103 there are buttons 104 provided enabling a user to control functionalities of the communication device 100. In addition to that, there are softkeys forming a command bar 105 and a scrollbar 106 available for the user for further control functionalities. In its main portion the screen 101 displays a selection menu, wherein the selection menu contains a plurality of graphical elements 120; 121; 122; 123; 124; 125; 126; 127; 128. The graphical elements 120; 121; 122; 123; 124; 125; 126; 127; 128 comprise at least one part 110, 111, 112, 113, 114, 115, 116, 117, 118, which is capable of indicating a selection of the graphical element 120, 121, 122; 123; 124; 125; 126; 127; 128. The part 110, 111, 112, 113, 114, 115, 116, 117, 118 is for example an icon.

Finally, there are three hard keys 108 provided in the lower part of the top surface 102 of the housing 103.

The term "communication item" shall have a broad meaning in relation to the present invention. On the one hand it includes e-mail, voice, and SMS messages and the like but also contacts with other people and web sites of service providers. On the other hand also media files like pieces of music, video clips or pictures shall be comprised by the meaning of communication item. However, technically speaking a contact or a communication item is just a data item.

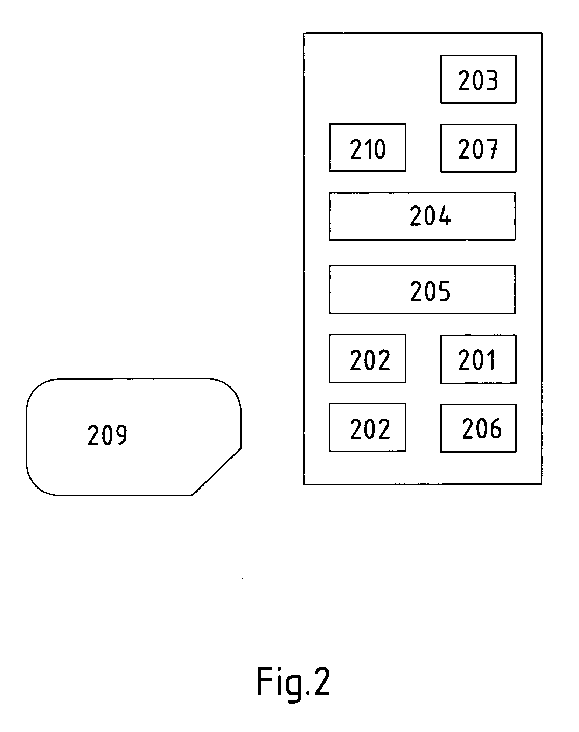

Figure 2 shows a schematic block diagram of the mobile communication device 100. The mobile communication device 100 comprises a mobile terminal 200 including a main processor 201 for controlling the operation of the mobile terminal 200. A memory 202 is coupled to the main processor 201 for storing data and applications that can be run on the main processor 201. Furthermore, the mobile terminal 200 comprises one or more communication interfaces. Particularly, the mobile terminal 200 provides a radio interface 203 for connecting the mobile terminal 200 wirelessly to a mobile communication network such as the PLMN mentioned above.

For capturing acoustic signals, particularly for capturing speech from the user of the mobile terminal 200, the mobile terminal 200 comprises a microphone 206. For outputting acoustic signals, the mobile terminal 200 comprises a loudspeaker 207. Moreover, the mobile terminal 200 comprises the screen 101, e.g. a liquid crystal display (LCD) 204. An input unit 205 interfaces the buttons 104, the command bar 105 and the hard keys 108.

By means of a card reader unit 208, the mobile terminal 200 can be connected to a subscriber identity module (SIM card) 209 to form the mobile communication device 100. The subscriber identity module 209 is a so-called smart card, which can be inserted into a card receptacle of the mobile terminal 200 that holds the card in a position, in which its contact elements are connected to corresponding contact elements of the card reader unit 208 of the mobile terminal 200. The card receptacle and the card reader unit 208 are usually arranged within a battery compartment of the mobile terminal 200, which is accessible by the mobile user.

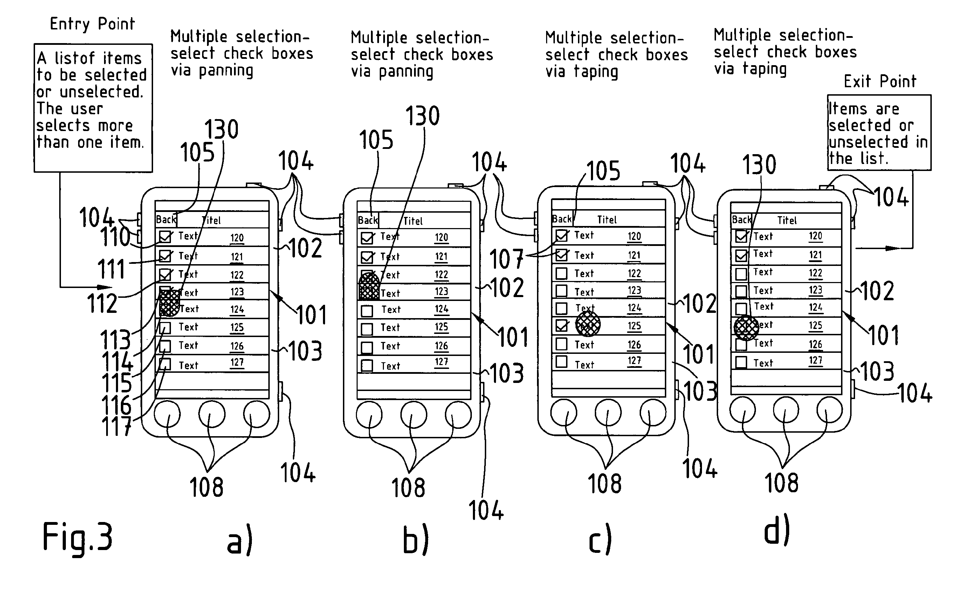

The subscriber identity module 209 may be configured as a subscriber identity module (SIM) according to the GSM standard or as a universal subscriber identity module (USIM) according to the UMTS standard, for example. Finally, the mobile terminal 200 is equipped with a GPS module 210 allowing to determine the location of the mobile terminal 200. In the memory 202 maps are stored such that the communication device 100 can indicate the present location_of the device of the screen 101. The functionality of the GPS module 210 provides the opportunity to support the user with additional contextual information related to the received communication items as will be described in the following in connection with figures 3a to 3d showing different kinds of views or representations of the communication items 107 on the screen 101. The main processor 210 allows to display a plurality of a graphical elements in a context menu on the display 204.

### Fig. 3

Fig. 3 consists of four parts, fig. 3a, 3b, 3c and 3d, which show a sequence of different states of a graphical user interface, especially a graphical user interface of a mobile user equipment as for example a mobile cellular phone.

The graphical user interface has a functionality, as it has been described in the other parts of this application, especially in the detailed description, for example with reference to figure 1.

The communication device shown in figures 3a, 3c and 3d contain a housing 103. On the periphery of the housing 103 there are buttons 104 provided enabling a user to control functionalities of the communication device 100. In addition to that, there are softkeys forming a command bar 105 and a scrollbar 106 available for the user for further control functionalities. In its main portion the screen 101 displays a selection menu, wherein the selection menu contains a plurality of graphical elements 120; 121; 122; 123; 124; 125; 126; 127. The graphical elements 120; 121; 122; 123; 124; 125; 126; 127 comprise at least one part 110, 111, 112, 113, 114, 115, 116, 117, which is capable of indicating a selection of the graphical element 120, 121, 122; 123; 124; 125; 126; 127. The part 110, 111, 112, 113, 114, 115, 116, 117 is for example an icon.

The sequence of different states of the graphical elements is described afterwards.

The sequence starts with an entry point, wherein a button 120; 121; 122; 123; 124; 125; 126; 127; 128 can be switched on or off. The button 120; 121; 122; 123; 124; 125; 126; 127; 128 comprises an icon 110, 111, 112, 113, 114, 115, 116, 117, 118 and a label, wherein the icon 110, 111, 112, 113, 114, 115, 116, 117, 118 is placed next to the label. The state of the button (switched on or switched off) is indicated by the icon.

### Fig. 3a

Fig. 3a shows the start of the sequence, wherein a first icon 110 is switched on. The other icons 111; 112; 113; 114; 115; 116; 117 are switched off. The switched on state of the icon 110 is displayed in a manner which is different from the other icons, 112, 113, 114, 115, 116 and 117.

According to an embodiment of the invention the menu is designed in a way, wherein at least one option for an action to be carried out with regard of the activation data is set in an "on" state by default.

Respectively, a button may be set in the "on" state by default.

### Fig. 3b

Fig. 3b shows the same activation status of the icons 110, 111, 112, 113, 114, 115, 116 and 117 as displayed beforehand in figure 3a.

A user touches the graphical element 123. The area, where the touch of the user occurs is afterwards called a marked area 130. It is for example a tap.

An operating system of the mobile user equipment evaluates the existence of the touch of the user and relates the marked area 130 with at least one graphical element 123.

An operating system of the mobile user equipment detects the touch and relates it to at least one corresponding graphical element 123.

To inform the user about a detection of the selection of the at least one graphical element 123, the operating system initiates a response, which informs the user about the detection of the selection.

The operating system, especially the operating system of the mobile user equipment initiates a system response.

The system response is for example a visual feedback or an haptic feedback. In the case of an haptic feedback the user feels for example a turn of a cube representing an area 113 of the graphical element 123.

The corresponding screen description / reference: this button is on (active). The system evaluates, if an user interaction occurs. In the case, that the user taps the graphical element 123 or at least a part 113 of the graphical element, the system generates a response, for e.g. a visual feedback: animated status change between on and off clockwise. Haptic feedback: the user feels e.g. cube turn and the edge of the cube turn over auditory feedback: tbd.

### Fig. 3c

An example of a visual feedback is shown in fig. 3c. Fig. 3c shows a rotation of the icon 113. This rotation may occur in different ways. It is for example possible, that the selected area 113 (icon) of the graphical element 123 has at least 3 states; wherein a first state before the selection is displayed in figure 3a, wherein a second state of the graphical element is shown in figure 3c and wherein a third state of the graphical element 113 is displayed in figure 3d.

It is within the scope of the invention, to integrate even more states of the graphical elements, e.g. the graphical 113. It is for example possible that the graphical elements, 123 and/or the part 113 of the graphical element change continuously or within certain steps, for example clock wise.

It is within the scope of the invention to integrate means for informing the user about the selection and a possibility to maintain the selection and by this initiate an action related to activation data corresponding to the selected graphical element 123.

The operating system of the mobile user equipment evaluates, if the selection of the graphical element 123 has been maintained after the display of the second state of the graphical element 123 and/or the part 113 of the graphical element 123.

In the case, that the selection is not maintained during the display of the second state and a certain time, especially a usual reaction time of users to signalling events is maintained, the operating system of the user equipment 110 deselects the graphical element 123.

In the case that the selection is not maintained, an action based on the activation data relating to the graphical element 123 is not carried out.

Additionally it is possible that in this case a previous selection, for example of another graphical element, for example the graphical element 120 is maintained.

In the case, that the user does not maintain the selection of the graphical element 123 it is alternatively and/or furthermore within the scope of the invention, that the communication device returns to the state beforehand described according to figure 3a; that means before the described starting process of the procedure.

In the case, that the selection of the graphical element 123 is maintained during the display of the second state of the graphical element 123 and/or the part 113 of the graphical element 123 an action based on the activation data related to the selected graphical element 123 is carried out.

The corresponding graphical illustration including the selection of the graphical element 123 is shown in figure 4d.

As described according to the figures 3a, 3b, 3c and 3d, as state transition of at least one icon 113 has occurred. The state of the icon 113 has changed from deselected to selected and thus activated.

Correspondingly a state of another icon 110 has changed from selected to deselected.

To the selection of the graphical element 123 and/or the activation corresponding to the graphical element 123, a system response maybe initiated.

Examples for the system response are a visual feedback, as for e.g. the predescribed change of the state of the icon 113 and/or additional features, as for e.g. an animated status.

For those skills in the art, it is possible to implement a different animated status changes, for e.g. clockwise status change between on and off.

According to one embodiment of the invention, items (icons) 110 and 113 have a transition animation with a rotation and/or a movement in directions different from each other.

Additionally it is possible to integrate an haptic feedback. In the case of an haptic feedback, the user feels for e.g. a cube turn of the icon 113 and the edge of the cube turn over.

Additionally and/or alternatively an auditory feedback may be given.

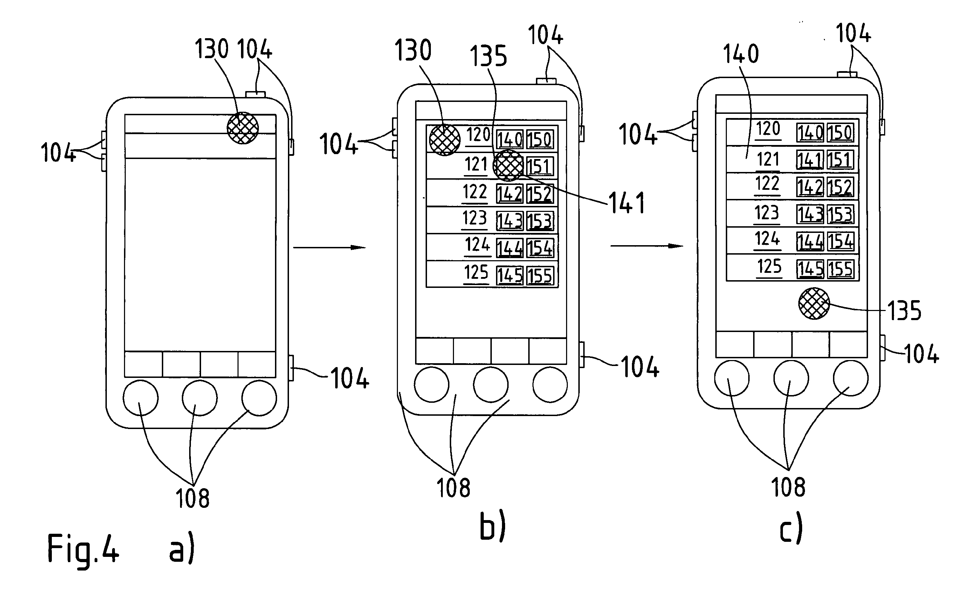

Fig. 4 consists of three parts, 4a, 4b and 4c, which show a sequence of different states of a graphical user interface, especially a graphical user interface of a mobile user equipment as for e.g. a mobile cellular phone.

The graphical user interface has functionality, as it has been described in the other parts of this application, especially in the detailed description, for e.g. with reference to figures 1, 2 and 3.

The communication device shown in figures 4a, 4b and 4c contains a housing. On the periphery of the housing there are buttons 104 provided for enabling a user to control functionalities of the communication device 100.

By marking - for e.g. through finger printing or other forms of tapping a title bar in a marked area 130, for e.g. by touching an icon in the menu bar 129 the user signalizes to the operating system of the user equipment 100, that he desires to view a menu bar consisting of a plurality of graphical elements informing about events and giving possibilities for a selection of actions.

The processing means of the mobile user equipment 100 register the tapping in the marked area 130 and handle it as an event to open a menu bar, consisting of a plurality of graphical user elements 120; 121; 122; 123; 124 and 125.

According to one embodiment the graphical elements 120; 121; 122; 123; 124 and 125 contain at least two other graphical elements 140; 141; 142; 143; 144; 145; 150; 151; 152; 153; 154 and 155.

The other graphical elements 140; 141; 142; 143; 144; 145; 150; 151; 152; 153; 154 and 155 offer context related selection possibilities.

According to a embodiment of the invention the elements 120; 121; 122; 123; 124 and 125 contain each two different selection possibility.

### Embodiments of the selectability of different options within the menu bar are described in the following:

The menu bar contains graphical elements 120; 121; 122; 123; 124 and 125 which each correspond to an event, for e.g. an incoming message, an incoming call, received items, or operating parameters.

An example of such a plurality of graphical elements is, that the graphical element 120 corresponds to a SMS, that the items 121 and 122 correspond to a missed call. The graphical element 123 represents an item received by e-mail. The graphical element 124 informs about a music song the user of the communication device 100 listens to. The graphical element 125 represents a current status of settings user equipment, for e.g. that the allowed status of the communication device is disabled, as it is set to silent.

The further graphical elements 140; 141; 142; 143; 144; 145; 150; 151; 152; 153; 154 and 155, display options for a selection, which correspond to the graphical elements 120; 121; 122; 123; 124 and 125, wherein they are located.

For e.g. the element 120 contains an information area, for e.g. about the message type and the name or identification number of the sender of the message and a read button 140 and dismiss button 150. In this case the graphical areas 140 and 150 are designed in selectable areas, for e.g. clickable.

The further graphical elements 121; 122; 123; 124 and 125 also contain at least two possibilities for an action, for e.g. to read an e-mail, to answer a call, to view a received item, to play a music song or to change a profile setting.

Answer a call, the user taps on the graphical element 141 which is integrated in the bigger graphical element 121 which represents the whole communication and/or event related item.

The graphical element 121 contains a further graphical element 151, which alternatively to the selection of a call allows to dismiss the message by tapping on the alternatively integrated further graphical element 151.

As described for this graphical element 121, further event - oriented respectively context-related a graphical element 120; 122; 123; 124 and 125 contain an alternative selection by a provision of two different selecting areas represented by a different graphical element 140; 141; 142; 143; 144; 145; 150; 151; 152; 153; 154 and 155.

Different actions allow to ignore the information in the graphical elements and to delete the corresponding graphical element.

A modification of the plurality of graphical elements 120; 121; 122; 123; 124 and 125 is enabled by the operating system of the communication device 100. The communication device 100 is capable of handling events and to adapt the menu bar.

An example such an activation of the menu bar is described afterwards.

The menu bar with items of interest is permanently active. In the case, that a certain activity requires the major parts of the display, the new application may be positioned in the foreground.

By tapping 130 in the title bar 129 the menu bar with graphical elements 120; 121; 122; 123; 124; 125; 140; 141; 142; 143; 144; 145; 150; 151; 152; 153; 154 and 155 is displayed in the foreground.

A situation before the tapping of the user in the area 130 is displayed in Fig. 7a.

After the tapping 130 the menu bar with the graphical elements 120; 121; 122; 123; 124; 125; 140; 141; 142; 143; 144; 145; 150; 151; 152; 153; 154 and 155 is put in the foreground.

However, it is possible, to integrate alternative solutions, for e.g. to generate the menu bar in the case, that a selection, for e.g. by tapping, in the area 130 occurs.

Fig. 7b shows that the user has selected by tapping in the area 130 to get more information about an activity represented by the graphical element 120.

The present invention enables a user to organize data items and to select activities in a time and resource efficient manner.

Since the user makes a selection, features are implemented to inform him about the selection and to ensure, that an activation is carried out in the case, that the selection is maintained.

The invention thus implements a high security against undesired, incidentally occurring activations in combinations with a quick selection and activation of desired actions.

### List of reference numerals

- 100: communication device
- 101: screen
- 102: top surface
- 103: housing
- 104: buttons
- 105: command bar
- 108: hard key
- 110: part of a graphical element
- 111: part of a graphical element
- 112: part of a graphical element
- 113: part of a graphical element
- 114: part of a graphical element
- 115: part of a graphical element
- 116: part of a graphical element
- 117: part of a graphical element
- 118: part of a graphical element
- 120: graphical element
- 121: graphical element
- 122: graphical element
- 123: graphical element
- 124: graphical element
- 125: graphical element
- 126: graphical element
- 127: graphical element
- 128: graphical element
- 130: marked area
- 135: marked area
- 140: graphical element
- 141: graphical element
- 142: graphical element
- 143: graphical element
- 144: graphical element
- 145: graphical element
- 150: graphical element
- 151: graphical element
- 152: graphical element
- 153: graphical element
- 154: graphical element
- 155: graphical element
- 201: main processor
- 202: memory
- 203: radio interface
- 204: LCD display
- 205: input unit
- 206: microphone
- 207: loud speaker
- 208: card reader
- 209: SIM card
- 210: GPS module

## Claims

1. Method for organizing data items, wherein the method comprises the following steps:
- generating a graphical element for each data item;
- associating the graphical element to the corresponding data item;
- determining activation data;
- linking the activation data with the data item;
- generating a menu bar, which comprises a plurality of graphical elements (110; 111; 112; 113; 114; 115; 116; 117; 118; 120; 121; 122; 123; 124; 125; 126; 127; 128; 140; 141; 142; 143; 144; 145; 150; 151; 152; 153; 154; 155);
- evaluating if a selection of at least one selected graphical element (123; 141) of the plurality of graphical elements (110; 111; 112; 113; 114; 115; 116; 117; 118; 120; 121; 122; 123; 124; 125; 126; 127; 128; 141; 142; 143; 144; 145; 150; 151; 152; 153; 154; 155) has occurred;
- carrying out an action based on the activation data related to the selected graphical element (123; 141);
- enabling a selection of a selected set of graphical elements (110; 111; 112; 113 120, 121; 122; 123);
- enabling a plurality of actions corresponding to the selected set of graphical elements (110; 111; 112; 113 120, 121; 122; 123).

2. The method according to claim 1, **characterized in that** the selected set of graphical elements is combinable with a plurality of actions.

3. The method according to claim 2, **characterized in that** the pluarality of actions is selectable from a further menu bar.

4. The method according to claim 3, **characterized in that** the further menu bar comprises a plurality of graphical elements.

5. The method according to any of the preceding claims, **characterized in that** the menu bar is permanently activated.

6. Mobile communication device comprising a radio interface (203), an input unit (205), a display (101, 204), and a processing means (201), **characterized in that**, the processing means (201) are enabled to carry out the method according to any of the preceding claims.
